# EUROPÄISCHE PATENTANMELDUNG

(11) **EP 2 444 184 A1**
(43) Veröffentlichungstag der Anmeldung: **25.04.2012**
(21) Anmeldenummer: 11182029.6
(22) Anmeldetag: 20.09.2011
(51) Int. Cl.: B23B 51/02

(54) **Schneidwerkzeug und Herstellungsverfahren**

(30) Priorität: 22.10.2010 DE 102010042814
(71) Anmelder: HILTI Aktiengesellschaft, 9494 Schaan (LI)
(72) Erfinder: Bischof, Michael, 6900 Bregenz (AT); Moseley, Steven, 6800 Feldkirch-Tisis (AT); Peters, Carsten, 9468 Sax (CH); Piontek, Damian, 86836 Untermeitingen (DE); Rauscher, Manfred, 86916 Kaufering (DE)

(57) **Zusammenfassung**

Das erfindungsgemäße Schneidwerkzeug hat einen Grundkörper aus Stahl, ein oder mehrere Schneidelementen, die ein Hartmetall aufweisen, und eine Fügeschicht (5) zwischen den ein oder mehreren Schneidelementen und dem Grundkörper. Die Fügeschicht (5) besteht aus einer Eisennickellegierung mit einem Nickelgehalt von wenigstens 25 Gew.-% und hat eine Stärke von wenigstens 0,3 mm.

## Beschreibung

### GEBIET DER ERFINDUNG

Die vorliegende Erfindung betrifft ein Schneidwerkzeug und ein Herstellungsverfahren, insbesondere für das Schneidwerkzeug.

### OFFENBARUNG DER ERFINDUNG

Das erfindungsgemäße Schneidwerkzeug hat einen Grundkörper aus Stahl, ein oder mehrere Schneidelementen, die ein Hartmetall aufweisen, und eine Fügeschicht zwischen den ein oder mehreren Schneidelemente und dem Grundkörper. Die Fügeschicht besteht aus einer Eisennickellegierung mit einem Nickelgehalt von wenigstens 25 Gew.-% und hat eine Stärke von wenigstens 0,3 mm.

Die Bohrer sind beim Bohren von stahlarmierten Betonwänden hohen mechanischen Belastungen ausgesetzt. Hierbei kann der Bohrkopf von dem Schaft abgeschert werden, insbesondere wenn der Bohrer auf eine Armierung trifft. Thermomechanische Spannungen in einer Fügezone zwischen dem Bohrkopf aus Hartmetall und dem Schaft aus Stahl verringern die Belastbarkeit. Die thermomechanischen Spannungen können beim Abkühlen nach einem warmen Fügen des Bohrkopfs auf den Schaft entstehen. Diesem wird durch eine geeignete Mischung des Hartmetalls und Auswahl des Stahls entgegengewirkt, derart, dass beide Körper efinia gleich stark beim Abkühlen auf Raumtemperatur schrumpfen.

Trotz einer derartig vorgenommenen Anpassung der thermomechanischen Eigenschaften erreichen die Bohrer nicht eine gewünschte Standhaftigkeit. Eine genauere Analyse zeigt überraschend, dass Bohrer bei ihrem ersten Einsatz den Anforderungen entsprechen. Von einem einem Dauerbelastungstest unterzogenen Los fabrikneuer Bohrer springen nur bei einer geringen Anzahl der Bohrkopf ab. Ein Abfall der Belastbarkeit der Fügezone zwischen Bohrkopf und Stahl verringert sich auch nicht wesentlich über die Dauer des Einsatzes. Allerdings zeigen Bohrer bei einem zweiten Einsatz einen erheblichen Abfall ihrer Belastbarkeit, sprich bei einem größeren Anteil eines Loses löst sich der Bohrkopf. Der Bruch der Fügezone erfolgt in der Regel sehr frühzeitig. Die Vorgeschichte beim erstmaligen Einsatz hat nur eine geringe Auswirkung auf die Belastbarkeit beim zweiten Einsatz. Nach dem zweiten Einsatz kann keine weitere Verminderung der Belastbarkeit erkannt werden.

Überraschenderweise erhöhte sich eine Belastbarkeit der Bohrer von seinem ersten Einsatz auf seinen zweiten Einsatz durch die Fügeschicht. Ausgehend von dieser festgestellten Verbesserung der Bohrer wird folgender Zusammenhang vermutet. Beim Einsatz des Bohrers kann der Bohrkopf eine Temperatur im Bereich von 350 bis 500 Grad Celsius erreichen. Der Schaft dehnt sich aus und Kohlenstoff kann innerhalb des Stahls diffundieren. Dabei können Fehlstellen besetzt werden, die bei dem Martensitsprung während der Herstellung des Bohrers entstanden sind. Da der Bohrkopf sich ebenfalls ausdehnt, ist die Fügezone stabil. Beim Abkühlen bleibt der Kohlenstoff jedoch an den nun eingenommen Stellen. Der Ausdehnungskoeffizient des Stahls nimmt signifikant ab, der Bohrkopf und der Schaft schrumpfen nicht mehr gleichmäßig. Es entstehen thermodynamische Spannungen. Die Fügezone nimmt diese Spannungen auf. Die Materialzusammensetzung der Fügeschicht, insbesondere der hohe Nickelanteil, schaffen die Anpassung der unterschiedlichen thermomechanischen Eigenschaften von Bohrkopf und Schaft, solange der Bohrer kalt ist. Sobald der Bohrer sich wieder auf 350 bis 500 Grad Celsius erwärmt, verringern sich die Spannungen ohnehin.

Das Hartmetall kann ein gesintertes Verbundmaterial aus einem Metallkarbid und einem Metallbinder sein. Das Metallkarbid ist in einer bevorzugten Variante Wolframkarbid und hat einen Anteil von wenigstens 70 Gew.-%, z.B. wenigstens 80 Gew.-% an dem Verbundmaterial. Das Wolframkarbid kann mit einem Anteil von bis zu 30 Gew.-% durch ein oder mehrere andere Metallkarbide, z.B. Titankarbid, Vanadiumkarbid, Tantalumkarbid, Niobkarbid, Molibdänkarbid, Chromkarbid, Zirkoniumkarbid, Hafniumkarbid, substituiert sein. Wolframkarbid und die anderen Metallkarbide werden als Granulat mit einer Korngröße im Bereich von 0,8 µm und 10 µm bereitgestellt. Ein metallischer Binder bildet den verbleibenden zweiten Anteil an dem Verbundmaterial. Beispiele für metallische Binder sind Kobalt, Nickel, Eisen, Wolfram, Molibdän, Chrom. Andere Materialien können als Spuren oder Verunreinigungen auftreten, habe jedoch einen Anteil von weniger als 2 Gew.-% an dem Verbundmaterial. Das Metallkarbid und der Metallbinder werden vermischt und zu einem Grünling geformt. Ein anschließendes Sintern härtet den Grünling aus.

Das erfindungsgemäße Herstellungsverfahren für ein Schneidwerkzeug beinhaltet folgende Schritte. Ein Schneidelement wird aus einer Mischung, die ein Metallkarbid und einen Metallbinder enthält, gesintert. Eine nickelhaltige Metallfolie wird zwischen das Schneidelement und einem Träger aus Stahl angeordnet. Wenigstens die Metallfolie wird bis eine materialschlüssige Verbindung zwischen dem Schneidelement und der Metallfolie und eine materialschlüssige Verbindung zwischen der Metallfolie und dem Träger entsteht erhitzt.

Das Erhitzen kann durch Widerstandsschweißen oder Lichtbogen-Schweißen erfolgen. Bei diesem Schweißen erfolgt nur eine geringe Diffusion aus der Fügeschicht in das Hartmetall. Eine Diffusion würde das gesinterte Gefüge des Hartmetalls verspröden und ein z.B. auf Schlag belasteten Bohrkopf schwächen.

Eine Ausgestaltung sieht vor, dass die Stärke der Fügeschicht zwischen 0,5 mm und 3 mm stark ist. Die Stärke der Fügeschicht nimmt erheblichen Einfluss auf die Eigenschaften des Werkzeugs, insbesondere bei einem Bohrmeißel. Die Fügeschicht stört aufgrund ihrer unterschiedlichen Dichte ein Weiterleiten eines Schlagpulses von dem Schaft in die Bohrspitze. Andererseits zeigt sich bei dünnen Schichten unter 0,1 mm keine erhöhte Stabilität des Bohrmeißels.

Eine Ausgestaltung sieht vor, dass der Nickelgehalt der Fügeschicht zwischen 27 Gew.-% und 52 Gew.-% liegt. Die Fügeschicht kann weiters einen Anteil von über 40 Gew.-% Eisen enthalten. Andere Stoffe, z.B. Chrom, Kobalt sind mit einem Gesamtanteil von weniger als 20 Gew.-%, vorzugsweise weniger als 10 Gew.-% in der Fügeschicht enthalten. Eisennickel-Legierungen mit keinen oder einem geringen Anteil an Stahlveredlern erweisen sich als besonders vorteilhaft.

Eine Ausgestaltung sieht vor, dass der Stahl des Grundkörpers aus der Klasse der niedriglegierten oder unlegierten Stähle ist. Die Stähle mit einem hohen Kohlenstoffgehalt lassen sich besonders gut härten, wodurch ein harter, unnachgiebiger Träger, insbesondere Schaft, herstellen lässt.

Eine Ausgestaltung sieht vor, dass das Hartmetall gesintert ist zu wenigstens 70 Gew.-% ein Metallkarbid und zu wenigstens 5 Gew.-% aus einer metallischen Binderphase besteht.

Eine Ausgestaltung sieht vor, dass die ein oder mehreren Schneidelemente vollständig aus dem Hartmetall bestehen. Wenigstens drei der Schneidelemente können zusammenhängen und einen monolithischen Bohrkopf bilden.

### KURZE BESCHREIBUNG DER FIGUREN

Die nachfolgende Beschreibung erläutert die Erfindung anhand von exemplarischen Ausführungsformen und Figuren. In den Figuren zeigen:

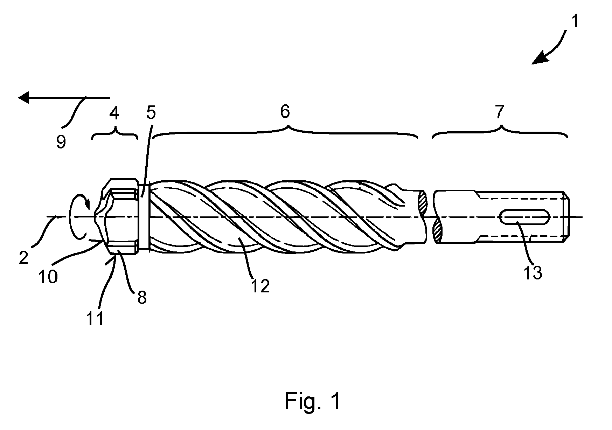

Fig. 1 einen Bohrmeißel

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

Fig. 1 zeigt einen beispielhaften Bohrmeißel 1. Der Bohrmeißel 1 hat längs einer Drehachse 2 ausgehend von seiner Spitze 3 einen Bohrkopf 4, eine Fügeschicht 5, einen Schaft 6 und ein Einsteckende 7. Der Bohrkopf 4 des meißelnden Bohrers 1 hat vorzugweise vier Schneiden 8, welche kreuzförmig um die Drehachse 2 angeordnet sind. Die Schneiden 8 haben in Arbeitsrichtung 9 weisende Schneid- und Meißelkanten 10 und parallel zu der Drehachse 2 verlaufende Flanken 11, welche vorzugsweise den Schaft 6 radial überragen. Der Schaft 6 kann vollständig oder partiell zu einer Wendel mit Abführnuten 12 für Bohrgut geformt sein. Das Einsteckende 7 kann offenen und geschlossene Nuten 13 für eine Drehmitnahme und zum Verriegeln des Bohrmeißels 1 in einer Werkzeugaufnahme aufweisen.

Der vorzugsweise monolithische Bohrkopf 4 ist aus einem oder mehreren Hartmetallen gefertigt. Eine Hartphase des Hartmetalls besteht zu wenigstens 70%, z.B. wenigstens 80% aus Wolframcarbid. Das Wolframcarbid liegt als Körner mit einem Durchmesser zwischen 0,8 und 10 µm vor. Cobalt dient als metallischer Binder und hat einen Anteil im Bereich von 5% bis 20%. Das Gemisch aus Wolframcarbid und Cobalt wird in einer dem Bohrkopf 4 entsprechende Form gepresst und anschließend gesintert.

Der Schaft 6 ist aus einem niedriglegierten Stahl. Stahlveredler, z.B. Chrom oder Nickel haben einen Anteil von weniger als 5%. Der Kohlenstoffanteil liegt im Bereich von 0,2% bis 0,6%. Ein Beispiel ist 34CrNiMo6 Stahl. Der Stahl ist durch Wärmebehandlung gehärtet.

Der Bohrmeißel 1 wird aus dem gesinterten Bohrkopf 4, der Fügeschicht 5 und dem gehärteten Schaft 6 zusammengesetzt. Die Fügeschicht 5 ist aus einer Eisennickellegierung mit wenigstens 30% Eisen und wenigstens 25% Nickel. Die Fügeschicht 5 kann als Blättchen mit einer Dicke von 0,5 mm bis 3,0 mm bereitgestellt werden. Eine teilweise Diffusion des Materials bei der Herstellung kann zu einer um bis zu 0,2 mm geringer verbleibenden Fügeschicht 5 führen.

Durch Schweißen wird der Bohrkopf 4 auf der Fügeschicht 5 und die Fügeschicht 5 auf dem Schaft 6 befestigt. Das Verschweißen kann bei einer Temperatur im Bereich von 900 bis 1100 Grad Celsius erfolgen. Als geeignetes Schweißverfahren wurde ein Widerstandsschweißen oder Lichtbogen-Impulsschweißen ermittelt. Bei dem Verschweißen erfolgt keine unmittelbar materialschlüssige Verbindung zwischen dem Bohrkopf 4 und dem Schaft 6, sondern paarweise materialschlüssige Verbindungen zwischen der Fügeschicht 5 und dem Bohrkopf 4 bzw. der Fügeschicht 5 und dem Schaft 6. Dadurch verbleibt nach dem Schweißen auch Fügeschicht 5 mit einer Stärke (Abmessung längs der Drehachse) von wenigstens 0,3 mm. Nur geringe Anteile der Fügeschicht 5 diffundieren in den angrenzenden Bohrkopf 4 und den angrenzenden Schaft 6. Hierfür erweist sich das Widerstandsschweißen als besonders erfolgreich. Vorteilhafterweise konnten somit Sprödphase bedingt durch Diffusionsphasen vermieden werden.

## Patentansprüche

1. Schneidwerkzeug mit einem Grundkörper aus Stahl, einem oder mehreren Schneidelementen, die ein Hartmetall aufweisen, einer Fügeschicht zwischen den ein oder mehreren Schneidelementen und dem Grundkörper
wobei
die Fügeschicht aus einer Eisennickellegierung mit einem Nickelgehalt von wenigstens 25 Gew.-% besteht und eine Stärke von wenigstens 0,3 mm aufweist.

2. Schneidwerkzeug nach Anspruch 1, **dadurch gekennzeichnet, dass** die Stärke der Fügeschicht zwischen 0,5 mm und 3 mm stark ist.

3. Schneidwerkzeug nach Anspruch 1 oder 2, **dadurch gekennzeichnet, dass** der Nickelgehalt der Fügeschicht zwischen 30 Gew.-% und 55 Gew.-% liegt.

4. Schneidwerkzeug nach einem der vorhergehenden Ansprüche, **dadurch gekennzeichnet, dass** der Stahl des Grundkörpers aus der Klasse der niedriglegierten oder unlegierten Stähle ist.

5. Schneidwerkzeug nach einem der vorhergehenden Ansprüche, **dadurch gekennzeichnet, dass** das Hartmetall gesintert ist zu wenigstens 70 Gew.-% ein Metallkarbid und zu wenigstens 5 Gew.-% aus einer metallischen Binderphase besteht.

6. Schneidwerkzeug nach einem der vorhergehenden Ansprüche, **dadurch gekennzeichnet, dass** die ein oder mehreren Schneidelemente vollständig aus dem Hartmetall bestehen.

7. Schneidwerkzeug nach einem der vorhergehenden Ansprüche, **dadurch gekennzeichnet, dass** wenigstens drei der Schneidelemente zusammenhängen und einen monolithischen Bohrkopf bilden.

8. Herstellungsverfahren für ein Schneidwerkzeug mit den Schritten Sintern eines Schneidelements aus einer Mischung, die ein Metallkarbid und einen Metallbinder enthält;
Anordnen einer nickelhaltigen Metallfolie zwischen das Schneidelement und einem Träger aus Stahl;
Erhitzen wenigstens der Metallfolie bis eine materialschlüssige Verbindung zwischen dem Schneidelement und der Metallfolie und eine materialschlüssige Verbindung zwischen der Metallfolie und dem Träger entsteht.

9. Herstellungsverfahren nach Anspruch 8, **dadurch gekennzeichnet, dass** die Metallfolie zwischen 0,5 mm und 3 mm stark ist.

10. Herstellungsverfahren nach Anspruch 8 oder 9, **dadurch gekennzeichnet, dass** die Metallfolie wenigstens 25 Gew.% Nickel enthält.

11. Herstellungsverfahren nach einem der vorhergehenden Ansprüche 8 bis 10, **dadurch gekennzeichnet, dass** das Erhitzen durch Widerstandsschweißen oder Lichtbogen-Schweißen erfolgt.
